# EUROPEAN PATENT APPLICATION

(11) **EP 1 531 476 A1**
(43) Date of publication of application: **18.05.2005**
(21) Application number: 04026682.7
(22) Date of filing: 10.11.2004
(51) Int. Cl.: G11B 27/10, G11B 27/34

(54) **Playback system**

(30) Priority: 12.11.2003 JP 2003383182
(71) Applicant: ORION ELECTRIC CO., Ltd., Takefu-City, Fukui 915-8555 (JP)
(72) Inventor: Nishitani, Kimio, Takefu-city, Fukui 915-8555 (JP)
(74) Representative: Goddar, Heinz J., Dr.

(57) **Abstract**

There is provided a playback system capable of setting information on identification positions simply and accurately by operating a predetermined key. With the playback system, if playback operation is started from start time t₀, and a marking key is operated at time tᵢ past time tₘ, corresponding to a position where a marking is to be affixed, fast reverse control is started to thereby bring back a playback position to time tⱼ. Then, the playback operation is resumed from this position, and the marking key is operated at the time tₘ, whereupon marking operation is executed, thereby storing an accurate position as information on an identification position.

## Description

### FIELD OF THE INVENTION

The invention relates to a playback system such as DVD {an abbreviation of (Digital Versatile Disk), including a record and playback system thereof}, HDD {an abbreviation of (Hard Disk Drive)}, and so forth, capable of recording information on identification positions therein.

### BACKGROUND OF THE INVENTION

A playback system such as a DVD, a HDD, and so forth has lately been in widespread use, and can digitally record video signals of large capacity, thereby enabling videos of higher quality to be played back. The playback system is constructed such that a scene, etc. which a viewer wants to watch once more during playback can be provided with a marking and the marking can be stored as information on an identification position. Accordingly, when replaying the scene, playback can be started immediately from the identification position with the marking affixed thereto. Or one scene for respective titles (a freeze-frame picture showing the contents of respective titles), displayed in a screen showing a list of recorded titles, can be set by the identification position provided with the marking.

However, when executing a marking operation during playback, if the marking operation is executed upon recognition of a scene which a viewer want to be provided with a marking, the operation is inevitably executed at a playback position past the scene, ending up therefore in storing a deviated position as the information on the identification position. Accordingly, when replaying the scene, there has been inconvenience in that operation such as fast reverse, and so forth, needs to be carried out even if playback is started from the identification position. When the marking is to be affixed at an accurate position, it has been necessary to execute complex operations such as a fast reverse operation, and a playback operation.

For example, in JP 1997-147534A, as a document on the related art, concerning playback control, there has been disclosed a playback system for effecting control such that, in response to the operation of step-forward-operation means instructing shift of a playback position, an access is shifted to a position, forward or backward, by a predetermined length of time, and after completion of an access shift, a playback operation is resumed. Further, in JP1994- 259832A, there has been disclosed an information playback system in which, when a control member is operated, a playback position is brought back to a position preceding a point of time when the operation of the control member is executed, and subsequently, a playback operation is executed at a playback speed slower by a predetermined amount than the standard speed, thereafter executing a playback operation at the standard speed.

### SUMMARY OF THE INVENTION

In the above-described documents on the related art, although it has been described that the playback operation is executed after a marking is shifted back to a position in the vicinity of a target playback position, the inconvenience experienced in the execution of the marking operation as described has not been recognized. In other words, with those documents on the related art, the main object is to shift back the playback position to some extent, and it is not assumed that the marking is to be affixed to an accurate playback position.

It is therefore an object of the invention to provide a playback system capable of setting information on an identification position simply and accurately by operating a predetermined key

A playback system according to one aspect of the invention comprises a playback unit for reading and playing back information recorded in a recording medium, and a control unit for controlling the playback unit, characterized in that the control unit comprises playback control means for executing fast reverse control of the playback unit upon detection of operation of a predetermined key during playback operation in the playback unit, subsequently, implementing playback control, and storage control means for detecting operation of an optional key during the playback control in the playback control means, thereby storing a playback position at the time of the operation of the optional key as information on an identification position.

Further, the playback system is characterized in that the playback control means detects continuous operation of the predetermined key for a predetermined time length, and executes fast reverse control for the duration of the continuous operation of the predetermined key.

Still further, the playback system is characterized in that the playback control means detects operation of the predetermined key, and executes fast reverse control for a predetermined time length.

A playback system according to another aspect of the invention comprises a playback unit for reading and playing back information recorded in a recording medium, and a control unit for controlling the playback unit, characterized in that the control unit comprises playback control means for executing fast reverse control of the playback unit for a predetermined time length upon detection of operation of a predetermined key during playback operation in the playback unit, subsequently, implementing playback control, and executing fast reverse control again for a predetermined time length upon detection of operation of an optional key other than the predetermined key during the playback control, subsequently, implementing again playback control, and storage control means for detecting operation of the predetermined key again during the playback control in the playback control means, thereby storing a playback position at the time of the operation of the optional key as information on an identification position.

Further, the playback system is characterized in that the playback control means executes the fast reverse control, subsequently, implements playback control at a playback speed slower than a normal playback speed.

With the playback system according to the invention, having a configuration as described above, it becomes possible to store the information on the identification position by operating the key twice, thereby extremely simplifying the marking operation. Further, since the fast reverse control is executed by the first operation of the key, and subsequently, the playback control is automatically executed, there is no particular need for operating the key in the meantime, and since a scene where the marking should be affixed is recognized by an operator during the playback operation after the fast reverse control, it is possible for the operator to operate the key at an accurate position, thereby accurately storing the information on the identification position.

Further, the playback control means detectd continuous operation of the predetermined key for a predetermined time length, and may execute fast reverse control for the duration of the continuous operation of the predetermined key, so that it is sufficient for the operator to execute the fast reverse control for only a time length required by the operator, thereby enabling marking operation to be efficiently executed.

Still further, the playback control means detects operation of the predetermined key, and may execute fast reverse control for a predetermined time length, so that the fast reverse control is executed for only the predetermined time length by only the operation of the predetermined key, thereby releasing the operator from excessive burden.

With the other playback system according to the invention, having a configuration as described above, by executing the fast reverse control for only the predetermined time length upon the detection of the operation of the optional key other than the predetermined key during the playback control after the fast reverse control by the operation of the predetermined key, playback will be again started from a position preceding further by the predetermined time length, thus causing a playback start position to shift back by operating one key Then, eventually by operating the predetermined key again, it is possible to accurately store the information on the identification position. Thus, the marking operation can be simply executed by operating two keys.

Further, the playback control means may execute the fast reverse control, and subsequently, may implement the playback control at the playback speed slower than the normal playback speed. By so doing, the operator can watch played back screens with leisure, and can execute the marking operation with higher precision.

Incidentally, "fast reverse" in the present specification refers to shifting back of the playback position of recorded information at a playback speed faster than the normal playback speed, including the case where the playback position is instantaneously shifted back relying on position information as in digital recording of a DVD, a HDD, and so forth, or the playback position is shifted back by fast-rewinding of a tape as in VCR.

### BRIEF DESCRIPTION OF THE DRAWINGS

Fig. 1 is a block diagram showing an embodiment of a playback system according to the invention;
Fig. 2 is a schematic representation illustrating operation of the embodiment of the invention;
Fig. 3 is a schematic representation illustrating operation of a variation of the embodiment of the invention;
Fig. 4 is a schematic representation showing a menu screen for marking setting;
Fig. 5 is a processing flow chart according to the embodiment of the invention; and
Fig. 6 is another processing flow chart according to the embodiment of the invention.

### PREFERRED EMBODIMENTS OF THE INVENTION

Embodiments of the invention is described in detail hereinafter. The embodiments described hereinafter being preferred embodiments in carrying out the invention, various technical limitations are provided therein, however, it is to be pointed out that the invention is not limited thereto unless otherwise explicitly stated.

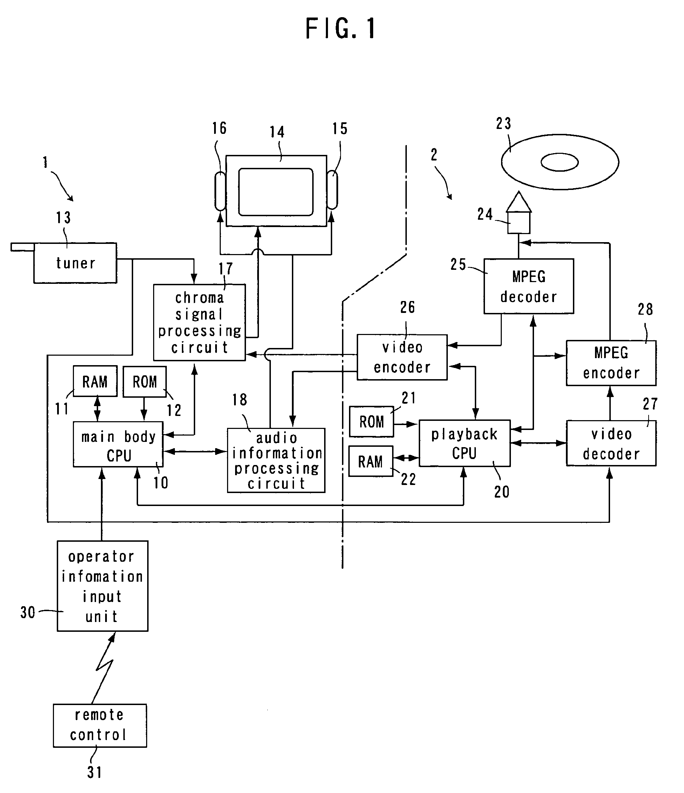

Fig. 1 is an overall block diagram showing an embodiment of a playback system according to the invention. A playback system main body 1 comprises a main body CPU 10 (hereinafter simply referred to as CPU 10) serving as a controller for processing information concerning overall control, and storage means including a RAM 11, and a ROM 12, wherein the CPU 10 reads and controls programs stored in the ROM 12, and various setting data stored in the RAM 11. The system main body 1 further comprises a tuner 13 for receiving television signals, a monitor 14 as a display unit for displaying video, and speakers 15, 16, incorporated in the monitor 14, and located on the left and right sides thereof, respectively. An output signal from the tuner 13 is processed by a chroma signal processing circuit 17, whereupon video information is transmitted to the monitor 14 for display control, and audio information is transmitted from the CPU 10 to an audio information processing circuit 18 to be sent out in sound from the speakers 15, 16, on the left and right sides of the monitor 14, respectively. Further, the system main body 1 is configured such that operator information of remote control 31, received by an operator information input unit 30, is delivered to the CPU 10. Meanwhile, a recording disk playback system 2, as a playback unit, is installed side by side with the system main body 1, and is used for playing back a recording disk such as a HDD, a DVD, and so forth. The recording disk playback system 2 comprises a playback CPU 20 (hereinafter simply referred to as CPU 20) for processing information concerning playback control, a ROM 21 for storing programs and so forth, and a RAM 22 for storing setting data and so forth. Recorded information is read from a disk 23 rotated by a rotation controller (not shown) by means of a pickup 24 to be thereby decoded by a MPEG decoder 25. As decoded information is digital information, the digital information is converted into analog information by a video encoder 26 to be subsequently transmitted to the chroma signal processing circuit 17, and the audio information processing circuit 18, whereupon video is displayed on the monitor 14 of the system main body 1, and sound is sent out from the speakers 15, 16, provided inside the monitor 14.

Further, by connecting a video decoder 27 on the recording disk playback system 2 side to the tuner 13, it is also possible to convert an analog signal received by the tuner 13 into a digital signal to be subsequently compressed by a MPEG encoder 28, implementing thereafter processing for recording in the disk 23 by means of the pickup 24.

In the marking operation, when a predetermined key of the remote control 31, for example, a marking key is operated, an operation signal of the marking key is delivered to the operator information input unit 30 to be thereby transmitted to the CPU 10. The CPU 10 transmits a control signal to the CPU 20, and the CPU 20 executes fast reverse control and playback control as described later on. When the operation signal of the marking key is delivered again, the CPU 10 transmits the control signal to the CPU 20, whereupon the CPU 20 executes processing such that the present playback position is stored, as information on an identification position, in the RAM 22.

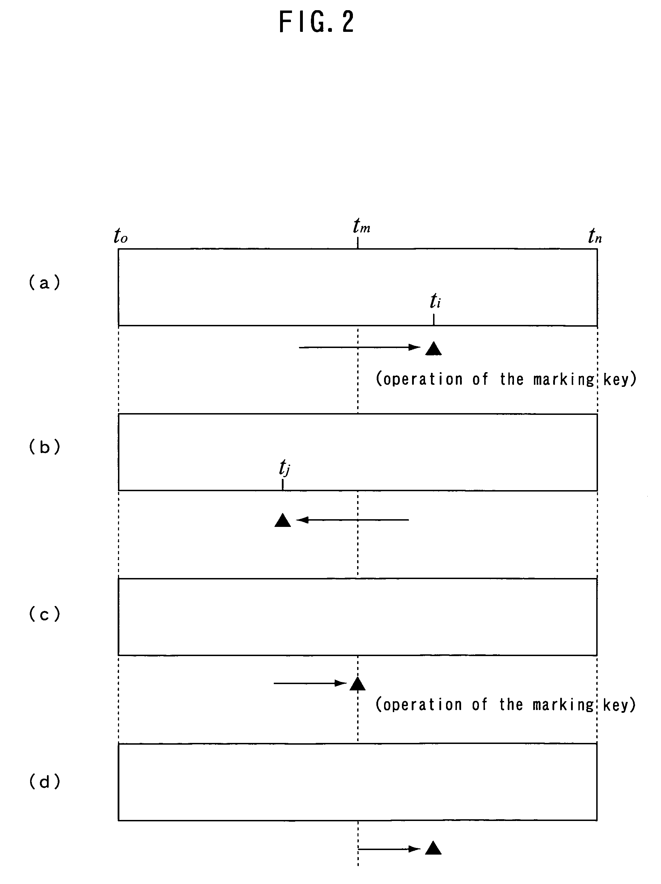

Fig. 2 is a schematic representation conceptually illustrating an example of playback control when operating the marking key. In Fig. 2, there is shown a case where, with a recording medium in which recording is made such that playback is started from start time to as position information, and playback is completed at completion time tₙ, the marking operation is executed at, for example, time tₘ, which needs to be entered in a catalog as information on an identification position.

As shown in Fig. 2 (a), if the marking key is operated at time tᵢ past the time tₘ, fast reverse control is first started to thereby bring back a playback position to time tⱼ (Fig. 2 (b)). In this case, as a method of setting a time length by which the playback position is brought back by the fast reverse control, there is available a method of bringing back the playback position by a time length corresponding to the duration of continued operation of the marking key With this method, however, when fast reverse is executed at a high speed, the magnitude of reverse becomes excessive, so that the playback position may be brought back by counting only the time length corresponding to the duration of the marking key being in operation. For example, in case the marking key is continuously operated for 10 seconds, the magnitude of reverse can be rendered proper in magnitude by executing fast reverse control such that the playback position is brought back by a time period for 10 seconds only. Besides, there is available another method of executing fast reverse control such that the playback position is brought back by a predetermined time length only. In this case, a time length for bringing back the playback position is preset to, for example, 10 seconds, and upon the start in operation of the marking key, fast reverse control may be executed for 10 seconds only.

After the fast reverse control has been executed as above, and the playback position has been brought back to time tⱼ, playback is executed (Fig. 2 (c)). In this case, playback may be executed at a normal playback speed or a playback speed slower than the normal playback speed. In the case of playing back at a playback speed slower than the normal playback speed, the playback speed is preset. An operator can store an accurate position as information on an identification position by operating the marking key again upon reaching a scene at the time tₘ, while watching video images played back. By executing playback at a slower speed at this point in time, the marking key can be operated with precision. Thereafter, upon the operation of the marking key, a playback operation is executed at the normal playback speed (Fig. 2 (d)).

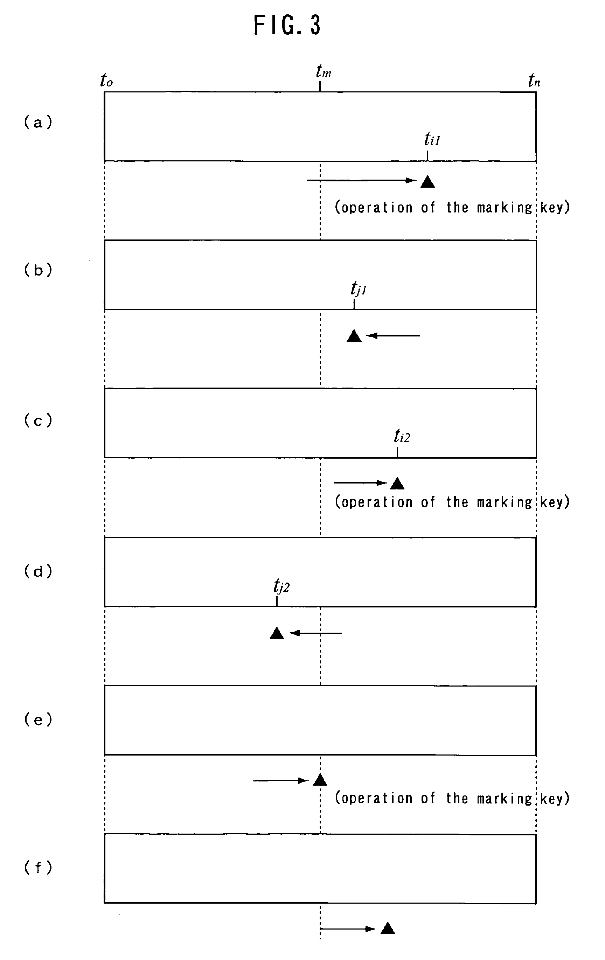

Fig. 3 is a schematic representation illustrating a variation example where a playback position is not fully brought back to the time tₘ when executing fast reverse control for only a predetermined time length in the case of Fig. 2. As shown in Fig. 3 (a), if the marking key is operated at time tᵢ₁ past the time tₘ, fast reverse control is first started to thereby bring back a playback position to time tⱼ₁ (Fig. 3 (b)). Thereafter, playback is automatically executed, however, as the playback position is not fully brought back to the time tₘ as yet, the operator operates a key other than the marking key, for example, a numeric character key at time ti2 (Fig. 3 (c)), whereupon fast reverse control is started again, thereby bringing back the playback position by a predetermined time length only (Fig. 3 (d)). Playback is started from the playback position at time tj2 preceding the time tₘ by the fast reverse control {Fig. 3 (e)}, so that the operator can store an accurate position, as the information on the identification position, in a catalog, by operating the marking key again upon reaching the scene at the time tₘ, while watching video images played back. Then, after the operation of the marking key, a normal playback operation is executed.

The method of executing the marking operation at the time of playback operation has been described in the foregoing, however, the same also can be used in executing a marking operation at the time of a search operation by fast-forwarding sequences. When a forward-search operation is executed, for example, 5-times faster, time for executing fast reverse may be set by allowing for time taken by the operator from his noticing a position at which a marking should be affixed until his operation of a key (on the order of 1 second), and processing time with a microcomputer (on the order of 0.5 second), taking into account a high playback speed. Further, even when a backward-search operation is executed, time for executing fast forward may be set similarly by allowing for time taken until the operator's operation of the key, and the processing time.

Furthermore, when information on an identification position is stored in the catalog by the operation of the marking key, by making an arrangement such that a scene played back is stopped once to be kept in the state of a freeze-frame picture, thereby enabling a position to be cataloged to be finely adjusted by operating the key, more accurate marking operation can be implemented.

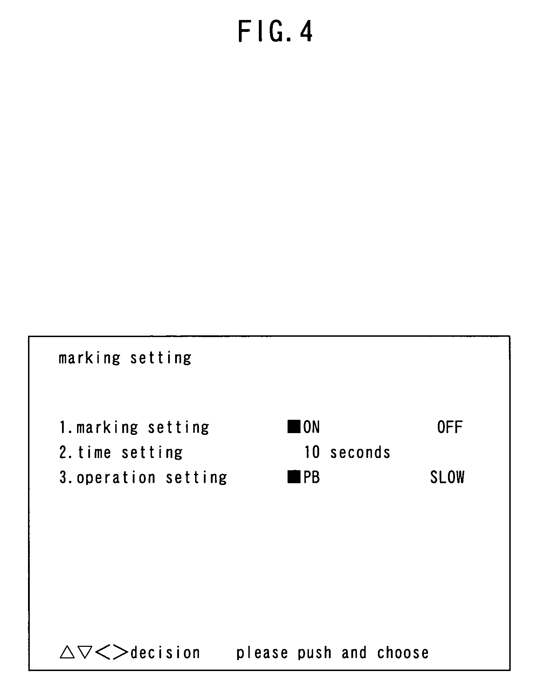

Fig. 4 is a schematic representation showing an example of a menu screen in the case of executing marking setting. With the case of this example, ON or OFF is first selected in Item of marking setting. If OFF is selected in Item of marking setting, upon operation of the marking key, a position at the time of the operation of the marking key will be stored as information on an identification position as before. If ON is selected in Item of marking setting, a time length for reverse can be set when executing fast reverse in succeeding Item of time setting. In the case of Fig. 4, "10 seconds" is entered. When "marking setting" is in the ON condition with no entry in "time setting", it will be set such that fast reverse is executed as long as the marking key is operated. Further, in Item of "operation setting", selection can be made on whether the playback operation after the fast reverse is executed at the normal playback speed (PB) or at a playback speed slower than the normal (SLOW).

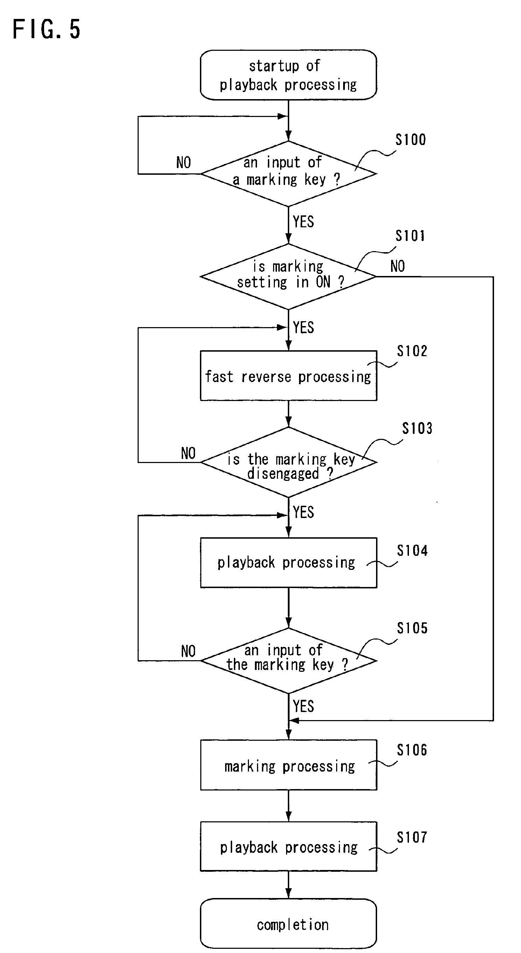

Fig. 5 is a processing flow chart in the case where the fast reverse control is executed for the duration of the continued operation of the marking key as in the case of Fig. 2. Upon the startup of playback processing, whether or not there has occurred an input of the marking key is checked (step S100). Upon detection of the input of the marking key, whether or not "marking setting" is in the ON condition is checked (step S101). If "marking setting" is in the OFF condition, marking processing is executed, continuing the playback processing. If "marking setting" is in the ON condition, fast reverse processing is executed (step S102). Subsequently, whether or not the marking key is disengaged (the input thereof is cancelled) is checked (step S103), and if the marking key is not disengaged, the fast reverse processing is continued as it is. Upon detection of the disengagement of the marking key, the playback processing is resumed (step S104). In this case, if "operation setting" in Fig. 4 is set to SLOW, the playback processing is carried out at a processing speed slower than the normal.

Whether or not there has occurred an input of the marking key during the playback processing is checked (step S105), and if there has occurred no input of the marking key, the playback processing is continued. If the operator executes operation of the marking key at a scene where a marking should be affixed, marking processing is executed, whereupon position information at the time of the operation of the marking key is stored as information on an identification position (step S106). Thereafter, normal playback processing is continuously executed (step S107), thereby completing the processing.

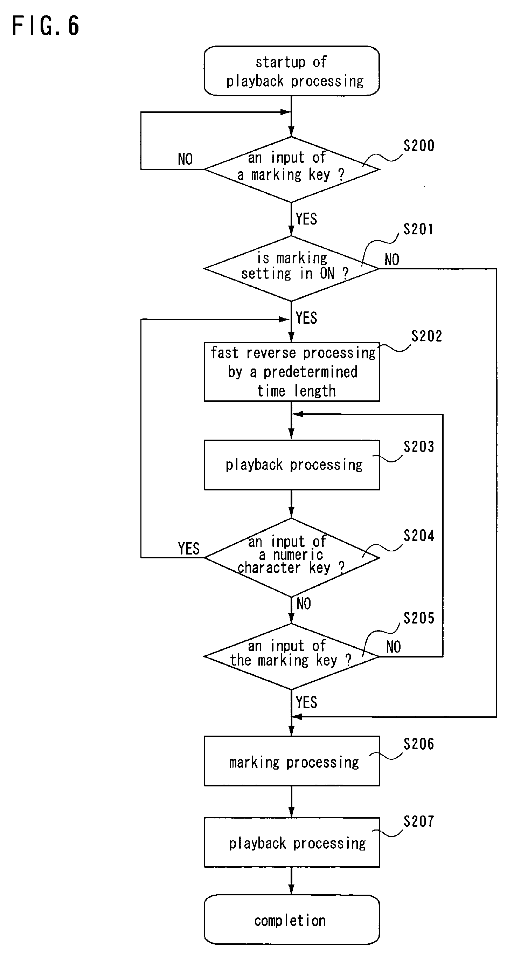

Fig. 6 is a processing flow chart in the case where the fast reverse control is executed by a predetermined time length only as in the case of Fig. 2.

As with the case of Fig. 5, upon the startup of playback processing, whether or not there has occurred an input of the marking key is checked (step S200). Upon detection of the input of the marking key, whether or not "marking setting" is in the ON condition is checked (step S201). If "marking setting" is in the OFF condition, marking processing is executed, continuing the playback processing. If "marking setting" is in the ON condition, fast reverse processing is started, thereby binging back the playback position to a position reached upon counting by the time length for reverse as set in "time setting" in Fig. 4 (step S202), and the playback processing is executed (step S203). If "operation setting" in Fig. 4 is set to SLOW, the playback processing is carried out at a processing speed slower than the normal. Checking is made on whether or not there has occurred an input of a numeric character key during the playback processing (step S204), and if yes, the playback processing reverts to the step S202, executing again the fast reverse processing for a predetermined time length. If there has occurred no input of the numeric character key in the step S204, checking is made on whether or not there has occurred an input of the marking key (step 5205), and if no, the playback processing reverts to the step S203, continuing the playback processing. If there has occurred the input of the marking key in the step S205), marking processing is executed (step S206), and continuing normal playback processing (step S207), thereby completing the processing.

As described hereinbefore, by operating the marking key twice, a marking can be affixed to an accurate position. With the embodiment described above, the invention has been described in the case of a disk record and playback system such as a DVD and so forth, however, the invention can be applied to a tape record and playback system such as a VCR and so forth, as well.

The features disclosed in the foregoing description, in the claims and/or in the accompanying drawings may, both separately and in any combination thereof, be material for realising the invention in diverse forms thereof.

## Claims

1. A playback system comprising a playback unit for reading and playing back information recorded in a recording medium, and a control unit for controlling the playback unit, said control unit comprising:
playback control means for executing fast reverse control of the playback unit upon detection of operation of a predetermined key during playback operation in the playback unit, subsequently, implementing playback control; and
storage control means for detecting operation of an optional key during the playback control in the playback control means, thereby storing a playback position at the time of the operation of the optional key as information on an identification position.

2. A playback system according to claim 1, wherein the playback control means detects continuous operation of the predetermined key for a predetermined time length, and executes fast reverse control for the duration of the continuous operation of the predetermined key.

3. A playback system according to claim 1, wherein the playback control means detects operation of the predetermined key, and executes fast reverse control for a predetermined time length.

4. A playback system comprising a playback unit for reading and playing back information recorded in a recording medium, and a control unit for controlling the playback unit, said control unit comprising:
playback control means for executing fast reverse control of the playback unit for a predetermined time length upon detection of operation of a predetermined key during playback operation in the playback unit, subsequently, implementing playback control, and executing fast reverse control again for a predetermined time length upon detection of operation of an optional key other than the predetermined key during the playback control, subsequently, implementing again playback control; and
storage control means for detecting operation of the predetermined key again during the playback control in the playback control means, thereby storing a playback position at the time of the operation of the optional key as information on an identification position.

5. A playback system according to any of claims 1 to 4, wherein the playback control means executes the fast reverse control, subsequently, implements playback control at a playback speed slower than a normal playback speed.
